# EUROPEAN PATENT SPECIFICATION

(11) **EP 3 312 743 B1**
(45) Date of publication and mention of the grant of the patent: **09.10.2019**
(21) Application number: 17197783.8
(22) Date of filing: 23.10.2017
(51) Int. Cl.: G06F 16/2453

(54) **METHOD AND SYSTEM FOR STORING QUERY RESULT IN DISTRIBUTED SERVER**
VERFAHREN UND SYSTEM ZUR SPEICHERUNG VON ABFRAGEERGEBNISSEN IN EINEM VERTEILTEN SERVER
PROCÉDÉ ET SYSTÈME DE STOCKAGE DE RÉSULTAT DE REQUÊTE DANS UN SERVEUR DISTRIBUÉ

(30) Priority: 24.10.2016 KR 20160138516
(43) Date of publication of application: 25.04.2018
(73) Proprietor: Samsung SDS Co., Ltd., Songpa-gu, Seoul (KR)
(72) Inventor: Jung, Jae Boo, Seoul (KR)
(74) Representative: Grünecker Patent- und Rechtsanwälte PartG mbB

(56) References cited:
- US-A1- 2004 098 373
- US-A1- 2012 047 107
- FLORIN RUSU ET AL: "GLADE : a scalable framework for efficient analytics", OPERATING SYSTEMS REVIEW., vol. 46, no. 1, 16 February 2012 (2012-02-16), page 12, XP055458394, US ISSN: 0163-5980, DOI: 10.1145/2146382.2146386

## Description

### BACKGROUND OF THE INVENTION

### 1. Field of the Invention

The present invention relates to a method for storing a query result in a distributed server and a system thereof. More specifically, the present invention relates to a method for querying a large volume of data stored in a database and distributing and storing a part of the queried data in a plurality of distributed servers, and a system for executing the method.

### 2. Description of the Related Art

Considering a case where a large-volume data, so-called big data, is stored in a relational database management system (RDBMS), for example, tens of thousands of sensors installed in a semiconductor manufacturing factory measure data at regular intervals and store the measured data in a database.

It is not easy to process these big data with a single server because there is a physical limitation even though the performance of the server is raised. Therefore, recently, instead of processing the big data in a single server, in many cases, data is distributed and processed in parallel in the plurality of servers. However, there is a problem in which, in order to distribute and process data in parallel in the plurality of servers, first, there is a need to load a large volume of data stored in the database, divide data into several pieces, and store data on each server.

A method mainly used to store the large volume of data stored in the database in each distributed server is a multi-query method. The multi-query method is a method in which each of a plurality of distributed servers is connected to a database, each query including a distributed conditional clause is executed to query of data to be stored by themselves, and the queried results are stored in the distributed server, respectively.

However, although the multi-query method is configured to execute each query in the standpoint of a distributed server, since the multiple queries are executed at the same time in the standpoint of the database, there is a drawback of consuming a large amount of resources of the database. Also, since as many connections to the database as the number of distributed servers are generated, there is also a drawback of a high possibility of interfering with access by other users beyond the maximum number of connection permission of database.

Thus, it is necessary to improve the loading method for data and distributed storage method corresponding to the preparation stage in the process of distributing and storing the large volume of data stored in the database in a plurality of servers and analyzing the data. That is, there is a need for a distributed storage method capable of reducing connection with the database, and reducing execution time, while consuming less resources of database.

US 2004/098373 A1 discloses a system and method for configuring a plurality of processing nodes into a parallel-processing database system. Each of a plurality of processing nodes connected by a network receive software and one or more configuration files related to the intended function of the processing node. The software may include homogeneous agent software, one or more library dynamic-link libraries (DLL), and the like. The configuration file is used to configure the homogeneous agent to operate as the intended node in a global-results processing matrix, a general-purpose query processing matrix, or a index-base query processing matrix. Another node or nodes may be configured to convert query-based programming code to intermediary source code in a common programming language and then compile the intermediary source code into a dynamic link library (DLL) or other type of executable. The DLL is then distributed among the processing nodes of the processing matrix, whereupon various subsets of the processing nodes execute related portions of the DLL substantially in parallel to generate query results.

### SUMMARY OF THE INVENTION

It is the object of the present application to provide a distributed storage method, which reduces execution time and the necessary storage capacity.

This object is solved by the subject matter of the independent claims.

Preferred embodiments are defined by the dependent claims.

An aspect of the present invention provides a method for storing the query result in a distributed server and a system thereof.

Aspects of the present invention are not restricted to those set forth herein. Other aspects that have not been mentioned will become more apparent to one of ordinary skill in the art to which the present invention pertains by referencing the detailed description of the present invention given below.

In accordance with an aspect of the present invention, there is provided a method for storing a query result in distributed server comprising executing, by a master server, a query for querying data in a database, receiving, by the master server, provision of meta data concerning the data and a first partial data constituting the data in a serialized state from the database based on a result of the executing, distributing, by the master server, the meta data and the first partial data provided in the serialized state to a first slave server and deserializing, by the first slave server, the first partial data distributed in the serialized state from the master server using the meta data.

In accordance with an aspect of the present invention, there is provided a system for storing a query result in distributed server comprising a master server configured to execute a query for querying data in a database, receive meta data concerning the data and a first partial data constituting the data in a serialized state from the database, and distribute the meta data and the first partial data provided in the serialized state to the first slave server and a first slave server configured to deserialize the first partial data distributed in the serialized state from the master server using the meta data.

In accordance with an aspect of the present invention, there is provided a computer program stored in a recording medium, which when executed by a processor of a computing device, causes the computing device to execute a method comprising executing, by a master server, a query for querying data in a database, receiving, by the master server, provision of meta data concerning the data and a first partial data constituting the data in a serialized state from the database based on a result of the executing, distributing, by the master server, the meta data and the first partial data provided in the serialized state to a first slave server and deserializing, by the first slave server, the first partial data distributed in the serialized state from the master server using the meta data.

The effects of the embodiment of the present invention are as follows.

The present invention improves the method for preparing big data analysis (= parallel processing) by storing a large volume of data to be obtained from a database through execution of a query by a user to be distributed in a plurality of parallel processing servers. According to the present invention, the total execution time can be greatly reduced as compared with the conventional method, and by reducing the connection to the database, a stable operation can be performed. In addition, it is possible to minimize the CPU and memory usage of the server. Accordingly, the invention can also be applied to big data applications in service form considering simultaneous users.

Since the present invention uses only one connection to the database, the availability of the database can be guaranteed. In addition, as compared with a case where the conventional database connector such as JDBC (Java Database Connectivity) objects the source byte array and serializes and stores the object in the application, the JDBC according to the present invention can directly store data in the byte array state without this process, and can object the data to be distributed in the plurality of servers. As a result, it is possible to obtain effects of speed improvement and storage capacity reduction.

The effects of the present invention are not limited to the aforementioned effects, and another effect that has not been mentioned can be clearly understood by ordinary technicians from the following description.

### BRIEF DESCRIPTION OF THE DRAWINGS

The above and other aspects and features of the present invention will become more apparent by describing in detail exemplary embodiments thereof with reference to the attached drawings, in which:
FIG. 1 is an exemplary view for explaining a data storage method according to a conventional distributed query method;
FIG. 2 is an exemplary view for explaining a conventional data storage method using a conventional single connection method;
FIG. 3 is an exemplary view for explaining a method for storing the query result in distributed server according to an embodiment of the present invention;
FIG. 4 is an exemplary view for explaining the operation of JDBC (Java Database Connectivity), using the conventional distributed query method;
FIG. 5 is an exemplary view for explaining the operation of JDBC (Java Database Connectivity), using the method for storing the query result in distributed server according to the embodiment of the present invention;
FIG. 6 is a conceptual view for explaining the internal operation of JDBC (Java Database Connectivity), using a conventional single connection method;
FIG. 7 is a conceptual view for explaining the internal operation of JDBC (Java Database Connectivity), using the method for storing the query result in distributed server according to an embodiment of the present invention;
FIG. 8 is a flowchart for explaining the internal operation of JDBC (Java Database Connectivity), using a conventional single connection method;
FIG. 9 is a flowchart for explaining the internal operation of JDBC (Java Database Connectivity), using the method for storing the query result in distributed server according to an embodiment of the present invention; and
FIGS. 10 and FIGS. 11a to 11c are exemplary views for explaining the effect of the method for storing the query result in distributed server according to the embodiment of the present invention.

### DETAILED DESCRIPTION OF THE INVENTION

Hereinafter, preferred embodiments of the present invention will be described with reference to the attached drawings. Advantages and features of the present invention and methods of accomplishing the same may be understood more readily by reference to the following detailed description of preferred embodiments and the accompanying drawings. The present invention may, however, be embodied in many different forms and should not be construed as being limited to the embodiments set forth herein. Rather, these embodiments are provided so that this disclosure will be thorough and complete and will fully convey the concept of the invention to those skilled in the art, and the present invention will only be defined by the appended claims. Like numbers refer to like elements throughout.

Unless otherwise defined, all terms including technical and scientific terms used herein have the same meaning as commonly understood by one of ordinary skill in the art to which this invention belongs. Further, it will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein. The terms used herein are for the purpose of describing particular embodiments only and is not intended to be limiting. As used herein, the singular forms are intended to include the plural forms as well, unless the context clearly indicates otherwise.

The terms "comprise", "include", "have", etc. when used in this specification, specify the presence of stated features, integers, steps, operations, elements, components, and/or combinations of them but do not preclude the presence or addition of one or more other features, integers, steps, operations, elements, components, and/or combinations thereof.

Hereinafter, the present invention will be described in more detail with reference to the accompanying drawings.

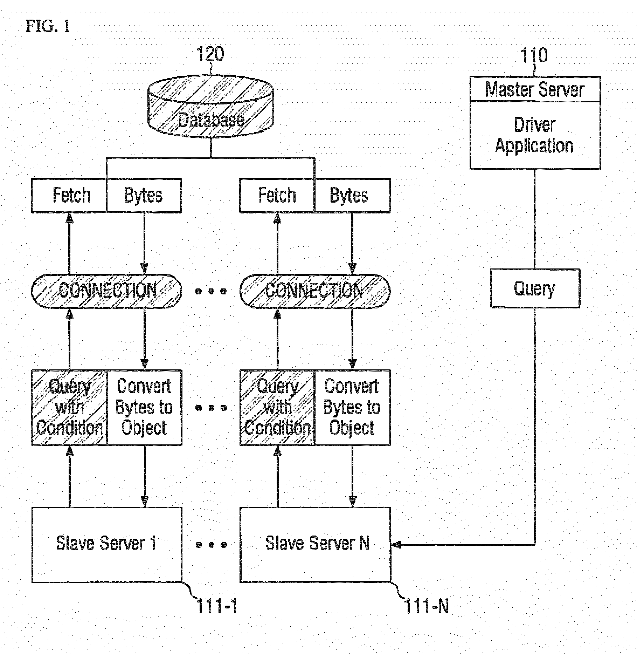

FIG. 1 is an exemplary view for explaining a data storage method according to a conventional distributed query method.

Referring to FIG. 1, it can be seen that a master server 110 and the slave servers 111-1, ..., 111-N are configured for parallel processing. It is possible to further enhance the speed of the computation when performing the parallel processing a large volume of data to be distributed in a plurality of slave servers 111-1, ..., 111-N, rather than the case of processing a large volume of data in a single master server 110.

In the conventional distributed query method, the master server 110 transmits a query for loading a large volume of data requiring analysis to the slave servers 111-1, ..., 111-N. Then, the slave servers 111-1, ..., 111-N create distributed queries so that there is no data duplication. That is, this is a method for adding the distributed conditional clause (where) to the query, and separately querying and storing the data.

When queries with different conditional clauses are executed in the database 120 from the slave server 1 (111-1) to the slave server N (111-N), a large amounts of data is dividedly queried in the database 120. Further, the database 120 transmits the queried data to the slave servers 111-1, ..., 111-N in a byte stream. The slave servers 111-1, ..., 111-N convert the transmitted bytes into objects and execute necessary arithmetic processing.

In this way, in the conventional distributed query method, the parallel processing was performed by a method that executes each query in each of the slave servers 111-1, ..., 111-N. However, since there is a need for N connections as the number of slave servers in the database 120, there are various problems.

First, since there are a large number of connections connected to the database 120 and the multiple queries are executed simultaneously, there is a drawback that large resources of the database 120 are consumed. In particular, when an index is not applied to the distributed conditional clause of the query executed by the plurality of slave servers 111-1, ..., 111-N or when an execution plan is not properly optimized even if the index is applied, the large resources of the database 120 are consumed.

Second, since the multiple queries are executed by a plurality of slave servers 111-1, ..., 111-N, there is a drawback that connections as many as the number of slave servers are required. This may cause high possibility of interfering with other users' access. This is because the physical performance of the database 120 is limited and the number of connections that can be processed at the same time is limited.

Of course, in a system such as a data warehouse for processing and analyzing a large volume of data, an access by a general user does not occur. However, otherwise, access by a general user may occur. At this time, when exceeding the number of permitted maximum connections of the database 120 due to the connection of the slave servers 111-1, ..., 111-N, a smooth use of the general user may become difficult.

Third, in the case of a query requiring a long execution time, there is a drawback that it takes a lot of time to complete the execution of the entire multi-executed queries. That is, even if the execution plan of the distributed query effectively uses the index, there may be a case where, at the time taken for the completion of the entire queries executed on each of the slave servers 111-1, ..., 111-N, the performance may be lower than the case of performing a full scan of the entire table at one time with one query.

Fourth, there is a drawback that there is a limit in adjusting the degree of distribution. The amount of data distributed to each of the slave servers 111-1, ..., 111-N is determined in accordance with the conditional clause (where) of the distributed query, but when the conditional clause is erroneously set, data may be concentrated in one of the slave servers.

Of course, in order to evenly distribute the data to the slave servers 111-1, ..., 111-N, the range is specified using a function such as rownum and the data may be distributed and queried. However, the rownum function may not be supported in the database 120, and performance problems may arise when using the rownum function with arrangement (order by).

When data is not evenly distributed to a plurality of slave servers 111-1, ..., 111-N, that is, when data is concentrated only in a specific slave server, since a load converges on a specific slave server, the effect of executing the parallel processing is cancelled out, and the overall performance may be degraded.

The conventional distributed query method for loading data to multiple parallel processing servers has been described through FIG. 1. In the conventional method, there were problems such as the load converging on the database 120, the limitation on the maximum number of connection permission numbers, the problem of overall performance, the skewed phenomenon of data.

The portions in which the color is darkened in the exemplary view of FIG. 1 are intervals in which these problems may occur. That is, the portions are intervals in which the connection generated between the database 120 and the slave server 111-1, ..., 111-N and the conditional clause of the distributed query are displayed in a dark color, and are intervals in which the above-described problems may occur.

Of course, there were also efforts to solve the problem of the distributed query method. One example thereof is a single connection method. This is a method for connecting the master server 110 to the database to load the data and distribute the loaded data into a plurality of slave servers 111-1, ..., 111-N, rather than the method for connecting a plurality of slave servers 111-1, ..., 111-N to the database 120 to load the data.

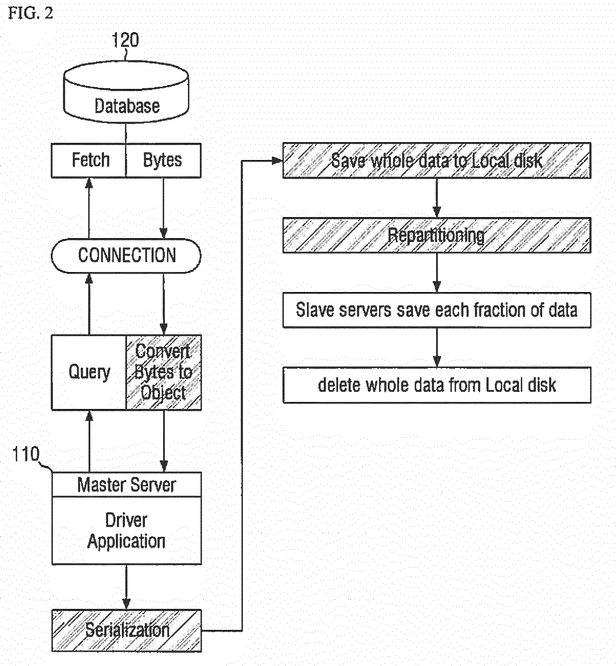

FIG. 2 is an exemplary view for explaining a conventional data storage method using a single connection method.

Referring to FIG. 2, unlike the distributed query method of FIG. 1, it can be seen that only a single connection from the master server 110 to the database 120 is generated. That is, a query for querying the entire data in the master server 110 is connected to the database 120 and directly executed, the result is received in bytes, and then the result is distributed into the plurality of slave servers 111-1, ..., 111-N.

In the single connection method, in order for the master server 110 to distribute data to the plurality of slave servers 111-1, ..., 111-N, a process of (Convert Bytes to Object) converting the data received in the form of bytes from the database 120 into an object, a process (Serialization) of serializing the converted data, and a process of repartitioning the serialized data are required.

Repartitioning work is a function used to distribute files in MapReduce or Spark. In order to perform the repartitioning work on the master server 110, since all the data needs to be stored in the master server 110 at once, in the case of large capacity data, insufficient disk capacity of the master server 110 may be caused.

Also, in order to store a large volume of data in the master server 110, since serialization and deserialization need to be performed on the master server 110, large resources are required for the master server 110. That is, a lot of CPU and memory are required.

Also, in a process in which a large volume of data is temporarily loaded on the master server 110 and then is distributed to the slave servers 111-1, ..., 111-N, a speed reduction or instability phenomenon due to a bottleneck phenomenon may be generated. That is, there may be a structure which is hard to be used by simultaneous users despite the use of a single connection.

Further, because a shuffle happens, the repartitioning work is relatively slow, and because a rearrangement is performed on the basis of a hash key or a range, a situation in which the order of the conventional query results is inverted may be caused.

Referring to FIG. 2, the process in which the data queried by the master server 110 is converted into an object, serialized, stored in the local disk of the master server 110, repartitioned, and sent to a plurality of slave servers 111-1, ..., 111-N to store a fraction in each of the slave servers 111-1, ..., 111-N and delete the complete data from the master server 110 is executed.

In this process, many CPUs and memory are consumed in the process of converting the bytes received from the database 120 into an object. In particular, Java-based JDBC (Java Database Connectivity) is converted into an object on the JVM (Java Virtual Machine) of the master server 110, but due to the use of large volume of memory, GC (Garbage Collection) frequently occurs.

Further, the load converges on the master server 110 in the process in which the master server 110 stores the large volume of data on the local disk and repartitions the data. That is, the single connection method solves the problem in which the load may converge on the database 120 and the specific slave server in the distributed query method, but the single connection method causes the problem of convergence of the load on the master server 110.

The portions in which the color is darkened in the exemplary view of FIG. 2 are intervals in which such problems may occur. That is, the portions are intervals in which the process of converting the result queried from the database 120 into the object and the process of repartitioning the result are displayed in dark color, and the aforementioned problems may occur.

The present invention attempts to solve all the problems that may occur in the conventional distributed query method and in the single connection method. That is, the present invention attempts to solve the problem in which the load converges on the database 120 in the distributed query method, and the problem of concentration of data which may occur between the plurality of slave servers 111-1, ..., 111-N. Also, the present invention attempts to solve the problem of consuming a large amount of resources of the master server 110 and the problem of repartitioning work in order to distribute data in the single connection method.

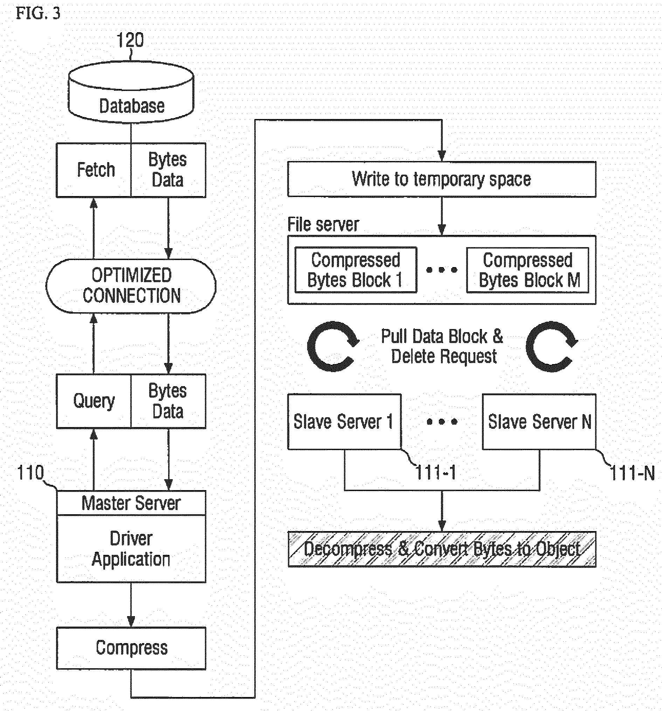

FIG. 3 is an exemplary view for explaining a method for storing query result in distributed server according to an embodiment of the present invention.

Referring to FIG. 3, as with the single connection method of FIG. 2, it can be seen that one connection from the master server 110 to the database 120 is generated. When using the data distribution storage method of the present invention, it is possible to execute the request query as it is, without the necessity of generating a conditional clause for distribution like the distributed query method. Also, the array data of the original byte may be intercepted in the middle and sent to the plurality of slave servers 111-1, ..., 111-N, without the need for converting a large volume of data sent from the database 120 into the object like the single connection method.

Further, in the plurality of slave servers 111-1, ..., 111-N, the master server 110 may be treated as a virtual database and connected, instead of being directly connected to the database 120 as in the distributed query method. That is, when bytes and meta data of the data queried in the database 120 are sent from the master server 110 to each slave server 111-1, ..., 111-N, each slave server 111-1, ..., 111-N may receive the sent bytes and meta data, and may convert them into the objects and store them on the local disk.

To summarize, the method for storing query result in distributed server of FIG. 3 is a method of the form that absorbs the advantages of the distributed query method described in FIG. 1 and the single connection method described in FIG. 2. As a result, the load of the database 120 or the load of the load master server 110 can be reduced, and a large volume of data can be processed in parallel in the respective slave servers 111-1, ..., 111-N.

Comparing the method for storing query result in distributed server of FIG. 3 with the single connection method of FIG. 2, the largest difference is in that in FIG. 3, the result queried in the database 120 is received in bytes, and is sent to the slave server 111-1, ..., 111-N as it is without the objecting process. Of course, in this process, it is possible to selectively apply the process of compressing the byte data in order to enhance the sending efficiency.

Referring to FIG. 3, when the master server 110 queries a large volume of data from the database 120, the master server 110 loads large amounts of data by distribution in accordance with a fetch size, rather than a large volume of data all at once. The master server 110 sends the divided byte blocks in order in accordance with the fetch size to each of the slave servers 111-1, ..., 111-N.

At this time, the byte blocks can be selectively compressed and sent. If the byte block is compressed and sent from the master server 110, the slave servers 111-1, ..., 111-N which have received the byte blocks decompress the received byte blocks, convert them into the objects, and store them on the local disk of the slave servers 111-1, ..., 111-N. That is, a large volume of data is stored separately in the data block unit in the slave servers 111-1,..., 111-N.

Also, in the master server 110, after sending the specific byte blocks to a specific slave server, the corresponding byte blocks stored on the local disk of the master server 110 are deleted. After that, the fetch is executed to store the next byte block on the local disk of the master server 110 and send the newly stored byte block to the next slave server. In this way, since a large volume of data is distributed to the slave servers 111-1, ..., 111-N immediately in the unit of the byte block, small resources of the master server 110 can be used.

Referring to FIG. 3, according to the method for storing query result in distributed server of the present invention, load may occur in the process of compressing performed to enhance the efficiency in the process of sending the byte blocks to the plurality of slave servers 111-1, ..., 111-N through a network from the master server 110 and decompressing in each of the slave servers 111-1, ..., 111-N. However, this is a selective process to enhance transmission efficiency and may be omitted

Comparing to the multi-query method of FIG. 1 or the single connection method of FIG. 2, it is possible to check that the load does not converge on the database 120 and the master server 110. In addition, since a large volume of data is evenly distributed to each of the slave servers 111-1, ..., 111-N, the data can be directly used in distributed processing applications such as MapReduce and Spark.

When using the method for storing query result in distributed server according to the present invention, since the master server 110 uses only one connection, the availability of the database 120 can be guaranteed. In addition, since the master server 110 directly sends data of the byte array state to each slave server 111-1, ..., 111-1N without the process of converting the bytes received from the database 120 into the object and repartitioning them, the data partition can be evenly distributed and the number of partitions can be adjusted.

To summarize, when using the method for storing query result in distributed servers according to the present invention, since the bytes sent from the database 120 are sent in the byte state without the need of serializing to send the network, there is no load (overload) of the master server 110, and since the data is sent by utilizing the byte blocks divided into fetch size as it is, it is possible to solve the concentration phenomenon of data, and since the number is given numbers in the order of the partitions and is utilized, it is possible to prevent the order of the query results from being reversed.

Also, since the master server 110 deletes the data immediately after sending the data to the slave servers 111-1, ..., 111-N, it is possible to reduce the consumption of disk and memory. Also, since each slave server 111-1, ..., 111-N is in charge of objectization executed by the master server 110, the burden associated with objectization can also be distributed.

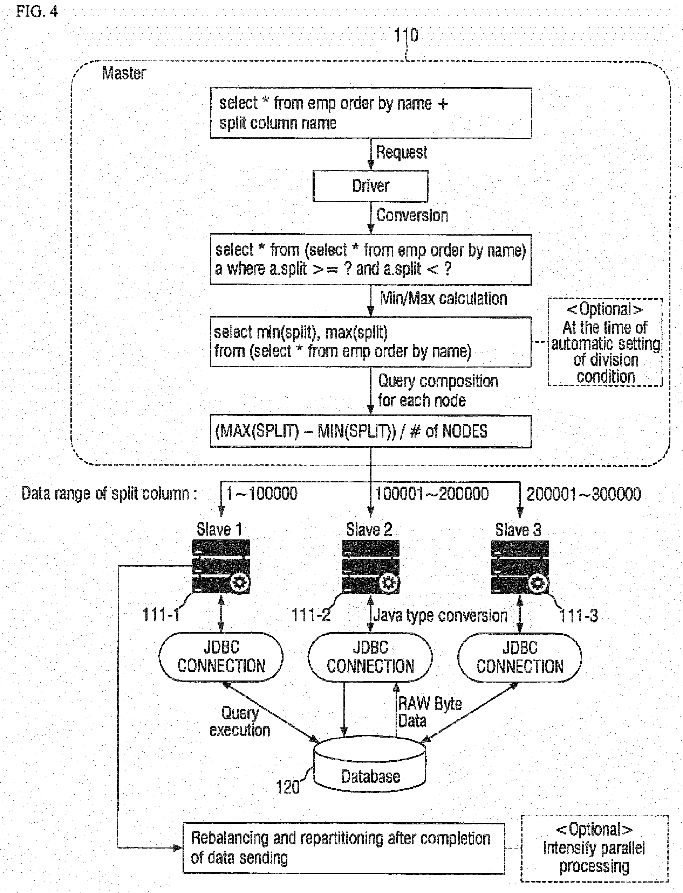

FIG. 4 is an exemplary view for explaining the operation of JDBC (Java Database Connectivity) using the conventional distributed query method.

Referring to FIG. 4, it is possible to see the process of querying the result arranged by name in an emp table which stores information on employees. At this time, in order to distribute the data to the three slave servers 111-1, 111-2, and 111-3, a split column is added as a column used in another conditional clause (where). For example, functions like rownum provided by Oracle or @ROWNUM provided by MySql may become split columns. Of course, in addition to the rownum, a unique key like the employee number of the emp table may also become a split column.

That is, even if the user inputs a query such as [select ^{∗} from emp order by name], in the process of sending the query from the master server 110 to each of the slave servers 111-1, 111-2, and 111-3, the user converts the query in the form such as [select ^{∗} from (select ^{∗} from emp order by name) a where a.split> =? And a.split <?] for data distribution. Each of the slave servers 1111-1, 111-2, and 111-3 is a method of executing the distributed query by passing upper and lower limits for data distribution as parameters to each of two question marks. Hereinafter, when displaying the query, it is indicated by [].

In order to obtain the upper limit value and the lower limit value of the split column needed to be passed from each of the slave servers 111-1, 111-2, and 111-3 to the parameter, the master server 110 performs query of [select min (split), max (split) from (select ^{∗} from emp order by name)]. If the split column is the rownum, the total number of rows of the result queried when executing [select ^{∗} from emp order by name] is in the range from 1 to the number of employees, and if the split column is the employee number, the range from the lowest employee number to the highest employee number may be queried.

When the difference between the minimum value and the maximum value of the split column obtained in this way is divided by the number of nodes of the entire slave server, the number of data to be distributed and stored in each slave server is obtained. In the example of FIG. 4, the split column is rownum, the minimum value of rownum is 1, and the maximum value is 300,000. At this time, since the number of slave servers is 3, 100,000 rows need to be distributed to each slave server.

That is, data from rownum 1 to 100,000 need to be distributed and stored in the slave server 1 (111-1), the data from rownum 100,001 to 200,000 need to be distributed and stored in the slave server 2 (111-2), and data from 200,001 to 300,000 need to be distributed and stored in the slave server 3 (111-3). An example of JAVA code executed by each of the slave server 111-1, 111-2, and 111-3 via an existing JDBC (Java Database Connectivity) will be executed as in Table 1 below.

**[Table 1]**

| |
|---|
| // slave server 1 |
| String sql = "select * from (select * from emp order by name) a where a.split >= ? and a.split < ?"; |
| pstmt = conn.prepareStatement(sql); |
| pstmt.setInt(1, 1); |
| pstmt.setInt(2, 1000000); |
| pstmt.executeQuery(); |
| // slave server 2 |
| String sql = "select * from (select * from emp order by name) a where a.split >= ? and a.split < ?"; |
| pstmt = conn.prepareStatement(sql); |
| pstmt.setInt(1, 1000001); |
| pstmt.setInt(2, 2000000); |
| pstmt.executeQuery(); |
| // slave server 3 |
| String sql = "select * from (select * from emp order by name) a where a.split >= ? and a.split < ?"; |
| pstmt = conn.prepareStatement(sql); |
| pstmt.setInt(1, 2000001); |
| pstmt.setInt(2, 3000000); |
| pstmt.executeQuery(); |

Looking at the portion for setting the parameters for dividing the data from the slave server 1 (111-1) to the slave server 3 (111-3) in Java code, it can be seen that the upper and lower limits of the split column of the data to be queried by each slave servers111-1, 111-2, and 111-3 are sent as parameters. Each of the slave servers111-1, 111-2, and 111-3 inquires data to be stored in the database 120, converts the data into the object, and prepares for the parallel processing.

Referring to FIG. 4, in order to divide the data, in the master server 110, there is a need for a process of querying the maximum and minimum values of the split column, and dividing the difference between the maximum value and the minimum value by the number of slave servers. In addition, there is a need for a process of querying data to be stored in each of the slave servers111-1, 111-2, and 111-3 from the database 120. That is, in the process in which the master server 110 queries the data and in the process in which the slave servers 111-1, 111-2, and 111-3 query the data, the load (overhead) may converge in the database 120.

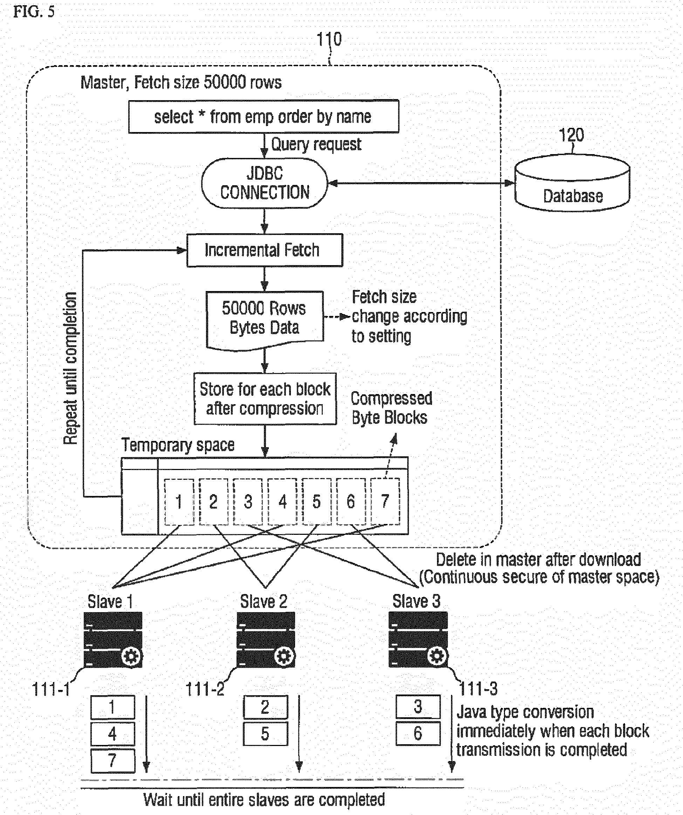

FIG. 5 is an exemplary view for explaining the operation of JDBC (Java Database Connectivity) using the method for storing query result in distributed server according to the embodiment of the present invention.

Referring to FIG. 5, unlike the distributed query method of FIG. 4, each of the slave servers 111-1, 111-2, and 111-3 is connected to the master server 110 to receive the transmission of data. Instead, the master server 110 is connected to the database 120 to query the data only once. As a result, it is possible to reduce the load converged on the database 120 in the distributed query method.

Referring to FIG. 5, the master server 110 executes the query [select ^{∗} from emp order by name] input by the user directly to the database 120. In this case, the fetch size is set to 50,000, and the database 120 divides the inquired result by the fetch size and sends it to the master server 110.

Here, the fetch size can be set via Java code as in Table 2 below. In the present invention, since it is desirable that one or more byte blocks be distributed to each slave server, it may be sufficient if the fetch size is smaller than or equal to the number of entire data/the number of slave servers. That is, if necessary, a process of setting the fetch size to the total number of data / the number of slave servers as in the following Java code can be added.

**[Table 2]**

| |
|---|
| ```
        ResultSet rs = stmt.executeQuery();
        rs.setFetchSize(50000);
``` |

Referring to FIG. 5, a total of 300,000 pieces of data are sent to the master server 110 from the database 120 with byte blocks of a fetch size, and the master server 110 sequentially givens the number to the sent data blocks. That is, the order is given sequentially from the first byte block to the last byte block by 1, 2, 3, 4, and the like.

Upon receiving the first byte block from the database 120, it is stored in a temporary storage space (Temporary Space) and then is compressed and sent to the slave server 1 (111-1). Next, the first byte block stored in the temporary storage space, and the next data is fetched from the cursor.

Next, the master server 110 stores the second byte block in the temporary storage space, and then the second byte block is compressed, sent to the slave server 2 (111-2), and deleted. Similarly, the next data is fetched from the cursor, the third byte block is stored in the temporary storage space, and then, the third byte block is compressed, sent to the slave server 3 (111-3), and deleted.

Since the byte blocks are sequentially numbered, the data is continuously distributed in the manner in which the fourth byte block is sent to the slave server 1 (111-1), again and the fifth byte block is sent to the slave server 2 (111-2), and the sixth byte block is distributed to the slave server 3 (111-3).

As illustrated in FIG. 5, in order to evenly distribute data blocks, it is possible to utilize the remainder obtained by dividing the order assigned to each data block by the number of slave servers. The byte block having the remainder of 1 can be distributed to the slave server 1 (111-1), the byte block having the remainder of 2 can be distributed to the slave server 2 (111-2), and the byte block having the remainder of 0 can be distributed to the slave server 3 (111-3) in order.

Of course, in addition to the method of sequentially distributing by utilizing the remainder, it is possible to distribute the byte blocks in various ways. For example, when particular slave server has better performance, the particular slave server can be set so that more byte blocks can be distributed with weights proportional to the performance in only the slave server.

Since the data blocks are sequentially distributed to the slave servers111-1, 111-2, and 111-3, it is unnecessary to inquire in advance the master data 110 how much the complete data amount is. Also, since the master server 110 connects to the database 120 and queries the entire data almost in full scan manner with one execution of query, it is also possible to reduce the load generated by executing each query in the slave servers111-1, 111-2, and 111-3, respectively.

The master server 110 sends the meta data together to the slave servers 111-1, 111-2, and 111-3, while sending the data block to the respective slave servers111-1, 111-2, and 111-3. Here, the meta data sent to the slave servers111-1, 111-2, and 111-3 by the master server 110 is the data sent to the master server 110 by the database 120.

Information on bytes sent by the database 120 is stored in the meta data. That is, information on how from what number of bytes to what number of bytes correspond to one row and again how from what number of bytes to what number of bytes corresponds to one column (column) in one row are stored. In addition, information on the data type of the corresponding column is stored. For example, information on whether the data type is a character type (char, varchar, text, etc.) or a numerical value (integer, float, double, etc.) is stored.

Since the master server 110 sends the data block and the meta data to the slave servers 111-1, 111-2, and 111-3 sequentially as they are received in the database 120, the slave servers111-1, 111-2, and 111-3 perform the objecting process of connecting to the master server 110 to receive the byte blocks, divide the rows in accordance with the meta data, divide the columns, and execute the form conversion of the data, like the process of connecting to the database 120 to query the data. That is, at the position of the slave servers 111-1, 111-2, and 111-3, the master server 110 performs a role like a virtual database.

Therefore, the slave servers111-1, 111-2, and 111-3 may execute the objecting process for parallel processing of data immediately when the data block is sent from the master server 110. That is, the process of objecting the data blocks received by each of the plurality of slave servers111-1, 111-2, and 111-3 may be executed in parallel. Then, if the objecting process is completed in all the slave servers111-1, 111-2, and 111-3, data distributed in MapReduce or Spark can be utilized.

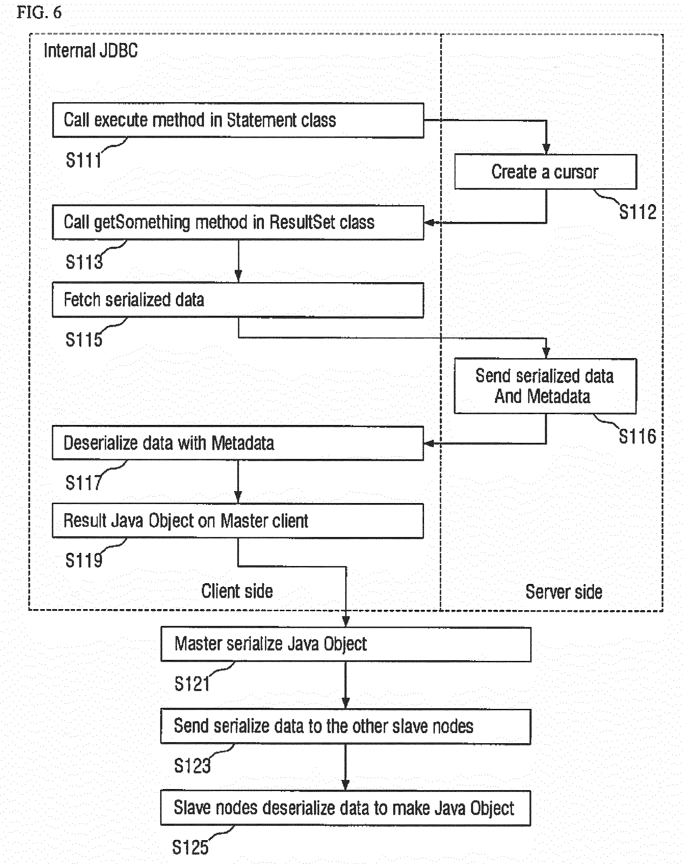

FIG. 6 is a conceptual view for explaining the internal operation of JDBC (Java Database Connectivity) using the conventional single connection method.

A left client side in FIG. 6 is the operation of JDBC in the master server 110 connected to the database 120, a right server side is the operation of JDBC in the data base 120. An example of the Java code (JAVA code) in the master server 110 for understanding in FIG. 6 is as in Table 3 below.

**[Table 3]**

| |
|---|
| ```
        // master server
        String sql = " select * from emp order by name";
        pstmt = conn.prepareStatement(sq1);
        ResultSet rs = pstmt.executeQuery();
 
        while (rs.next()) {
        String name = rs.getString(1);
        ...
        }
``` |

Referring to FIG. 6, a process (S111) of executing a query using the Statement class of Java by the master server 110 corresponds to "pstmt = conn.prepareStatement (sql);" in the sample code of Table 3. Upon execution of the query, the database 120 generates a cursor, inquires the data by the fetch size and responds (S112), accordingly.

Referring to FIG. 6, the process (S113) of bringing data using the Java ResultSet class by the master server 110 corresponds to "String name = rs.getString (1);" in the sample code of Table 3.

Further, the master server 110 continues to fetch the data using "rs.next ()" (S115). The database 120 sends bytes and meta data to the master server 110 (S116), and the master server 110 interprets the byte using the meta data (S117) and convers the byte into the object (S119).

Next, the serial process is executed again to divide the converted object data into a certain size and send it to the plurality of slave servers 111-1, ..., 111-N (S121). The serialized data is sent from the master server 110 to the plurality of slave servers 111-1, ..., 111-N via the network (S123), and after sending, the sent data is sent to the master server 110. The slave servers 111-1, ..., 111-N receive the data, convert them again into Java objects and store them (S125).

As described in FIG. 6, in the conventional single connection method, in the JDBC internal operation, an unnecessary objecting process (S119), the serializing process (S121), and a deserializing process (S117) are executed in the master server 110. These processes are necessary for the master server 110 to equally distribute a large volume of data to each slave server 111-1, ..., 111-N.

In contrast, according to the present invention, even without executing such a process inside the JDBC of the master server 110, a large volume of data is attempted to be evenly distributed to each of the slave servers 111-1, ..., 111-N. To this end, it is necessary to modify the conventional JDBC.

That is, in order to execute the method for storing query result in distributed server of the present invention, there is a need for a Java connector (JAVA Connector) that operates in a different way from the conventional JDBC. Conventionally, four kinds of Java connectors in total, type 1 to type 4 are defined. It is possible to check detailed information on the type of Java connector from the wiki page https://en.wikipedia.org/wiki/JDBC_driver.

Since the conventional JDBC drivers from type 1 to type 4 are conventions which are designed before the parallel processing widely spreads, the processes that are not required for the parallel processing are also included. Therefore, in the present invention, such a conventional JDBC driver is modified to provide a JDBC driver specialized for parallel processing.

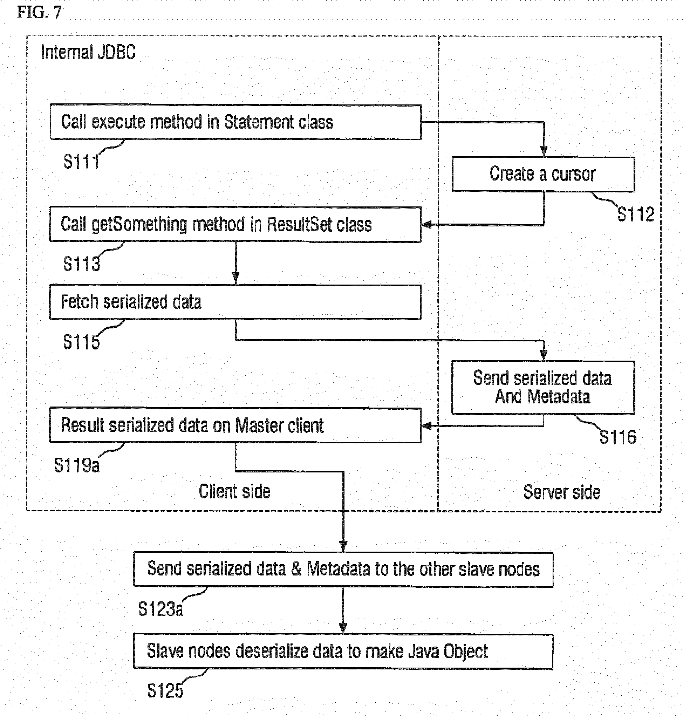

FIG. 7 is a conceptual view for explaining the internal operation of JDBC (Java Database Connectivity) using the method for storing query result in distributed server according to one embodiment of the present invention.

Referring to FIG. 7, the initial processes S111, S112, S113, S115, and S116 of querying a large volume of data to the database 120 in the master server 110 is the same as the process of FIG. 6. Instead, after receiving the data sent by the database 120 in the master server 110, the process of deserializing the data (S117), and the process of objecting the data (S119) are modified.

In the JDBC driver of the present invention, since the master server 110 directly sends the bytes sent by the database 120 to the slave servers 111-1, ..., 111-N, it is possible to check that the deserialization process (S117) is completely omitted.

Further, instead of the process (S119) of converting the data into an object after executing the deserialization process in FIG. 6 and dividing the data in accordance with the number of slave servers, in FIG. 7, the byte block sent from the data base 120, that is, the serialized data is directly sent to the slave servers 111-1, ..., 111-N.

That is, instead of the process (S121) of converting the bytes sent from the database 120 into objects (S119), dividing the converted objects and serializing and sending the objects again in FIG. 6, in FIG. 7, the process was changed to a process (S119a) of sending the byte sent by the database 120 the slave servers 111-1, ..., 111-N as it is.

Further, in FIG. 6, since the master server 110 has sent the data converted into the object to the slave servers 111-1, ..., 111-N via the network (S123), meta data has not been separately sent. In the slave servers 111-1, ..., 111-N, if the serialized data sent via the network is deserialized in accordance with the network interface, it can be immediately used as objects (S125).

Instead, in FIG. 7, the serialized data sent by the master server 110 to each of the slave server 111-1, ..., 111-N is the byte blocks sent by the database 120, in order to deserialize the data, there is a need for meta data which is the criterion of converting the data into bytes by the database 120.

Accordingly, the master server 110 further sends the meta data together, while sending the serialized data to the slave server (S123a). Further, the slave server converts the serialized byte block sent by the master server 110 into an object (S125), using the received byte blocks and the meta data.

Comparing FIG. 6 with FIG. 7, it can be seen that the objecting process (S119) and the semi-serialising process (S117) performed in the master server 110 of FIG. 6 are omitted in FIG. 7 to reduce the load which converges on the master server 110. That is, the master server 110 of the present invention uses a modified JDBC driver to immediately transmit a large amounts of data to the slave servers 1 11-1, ..., 111-N.

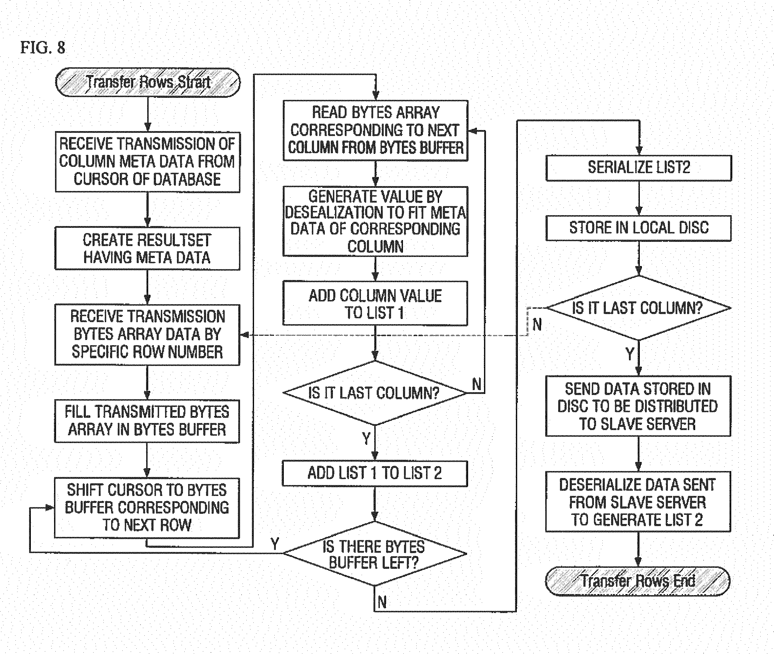

The difference between the conventional large volume distributed data storage method and the large volume of data distribution storage system according to the present invention was investigated above. The internal operation of JDBC described with reference to FIGS. 6 and 7 is illustrated in the flowchart in FIG. 8 to FIG. 9.

FIG. 8 is a flowchart for explaining the internal operation of JDBC (Java Database Connectivity) using the conventional single connection method.

Prior to the explanation of FIG. 8, since the standard JDBC interface does not have separate objects indicating Row, in order to send the query result via the network, it is necessary to define a DTO (data-transmit-object). In the flowchart of FIG. 8, List was used as DTO. Here, List 1 is an object corresponding to a single row, and List 2 is an object corresponding to a table in which a plurality of rows is gathered.

In the JDBC interface, ResultSet class that is the query result is an Iterator method, which may execute the next () function until the following result (row) to obtain the next row, and may execute the geXXX() function to bring data of a particular column. It corresponds to the Java code "while (rs.next ()) {...}" and "String name = rs.getString (1);" mentioned in Table 3.

Referring to FIG. 8, the master server 110 receives the meta data of the column from a cursor of the database 120 to generate a ResultSet class having the meta data. Next, the master server 110 receives a specific row number as byte data by the fetch size. The sent byte array is filled in the buffer, and data is fetched one by one.

That is, one row is read from the byte buffer, the values corresponding to each column is deserialized to match the meta data, added it to List1, and the next column is read. If all the columns are read, the processes of adding List 1 to List 2, reading the next row, and brining the column value of the next row read again are repeatedly performed.

If all the rows are read, that is to say, if there is no byte buffer received from the database 120, the List 2 is serialized and stored on the local disk of the master server 110, and data is brought from the cursor by the size of the fetch.

If all the data are brought from the cursor, the cursor is in the closed state, which means that all the data are read to convert into an object, and stored on the local disk of the master server 110. The entire data stored on the disk is evenly divided by the number of slave servers and then is sent to each slave server. In each slave server, serialized data sent by the master server 110 is received, is deserialized, and is restored to the object of List 2.

As illustrated in FIG. 8, the process of reading data by the size of the fetch in the cursor generated in the database 120, the process of dividing the read byte into rows, the process of dividing the bytes divided by rows into columns are repeatedly performed for all data. As a result, the load converges on the master server 110, and resources are consumed.

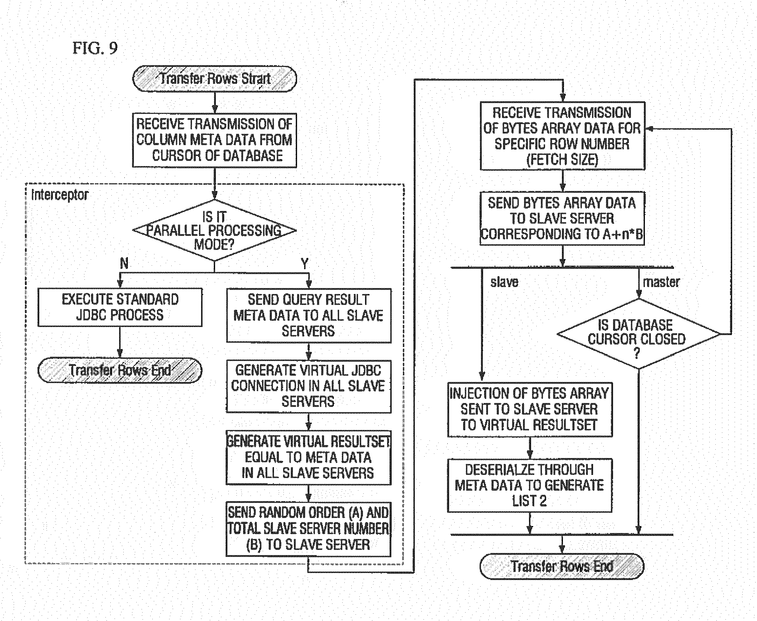

FIG. 9 is a flowchart for explaining the internal operation of JDBC (Java Database Connectivity) using the method for storing query result in distributed server according to an embodiment of the present invention.

In the present invention, another JDBC which can be used for parallel processing is generated and used. If the incoming request does not require the parallel processing, the data may be brought, using the standard JDBC driver of the conventional type 1 to type 4, and if the parallel processing is required, another JDBC driver provided by the present invention may be used.

According to another JDBCD driver provided by the present invention, in the same way as the single connection method from the standpoint of the master server 110, the master server 110 directly connects to the database 120 to bring the data, and the data is immediately sent to the slave server. Instead, the master server 110 distributes the byte blocks, using the total number of slave servers.

As explained with reference to FIG. 5, when divided by 3 which is the total number of slave servers, such as 1, 4, and 7, only the byte block having the remainder of 1 is sent to the slave server 1 (111-1). When divided by 3 which is the number of all slave servers, such as 2 and 5, only the byte block having the remainder of 2 is sent to the slave server 2 (111-2). When divided by 3 which is the total number of slave servers such as 3 and 6, only the byte block having the remainder of 0 is sent to the slave server 3 (111-3).

That is, the master server 110 distributes byte blocks with the formula of A + n^{∗}B. Where B is the total number of slave servers, and A corresponds to the random order in which current byte block needs to be distributed. That is, as illustrated in the example of FIG. 5, it corresponds to the remainder divided by the total slave number B.

Further, in the standpoint of the slave servers 111-1, ..., 111-N, the slave servers 111-1, ..., 111-N performs the process of bringing the data to be processed and converting it into an object.

Instead of directly connecting the slave servers 111-1, ..., 111-N to the database 120, the master server 110 is treated like a virtual database and the data base 120 is connected to the master server 110. As a result, the master server 110 immediately sends the byte block and the meta data, which are sent by the database 120 to the master server 110, to the slave server 111-1, ..., 111-N.

As in the conventional distributed query method, since the slave servers 111-1, ..., 111-N are connected to a virtual database (= master server) and receive byte blocks of data to be processed by themselves, if only a small modification is applied to the source constructed by the conventional distributed query method, it can be reused to use the method for storing query result in distributed server of the present invention.

That is, even by simply exchanging the JDBC used by the slave servers 111-1, ..., 111-N in the distributed query system with the improved JDBC of the present invention, the slave servers (111-1, 111-N) can convert the sent block byte into an object, using the meta data. This process can be executed in parallel in the plurality of slave servers 111-1, ..., 111-N.

As described with reference to FIG. 9, the method for storing query result in distributed server according to the embodiment of the present invention is a method of created by absorbing advantages of the single connection method in the standpoint of the master server 110, and by absorbing the advantages of the distributed query method in the standpoint of the slave servers (111 -..., 111-N), respectively. Thus, it is possible to reduce the load converging on the database 120 and the master server 110, and to distribute the load to the slave servers.

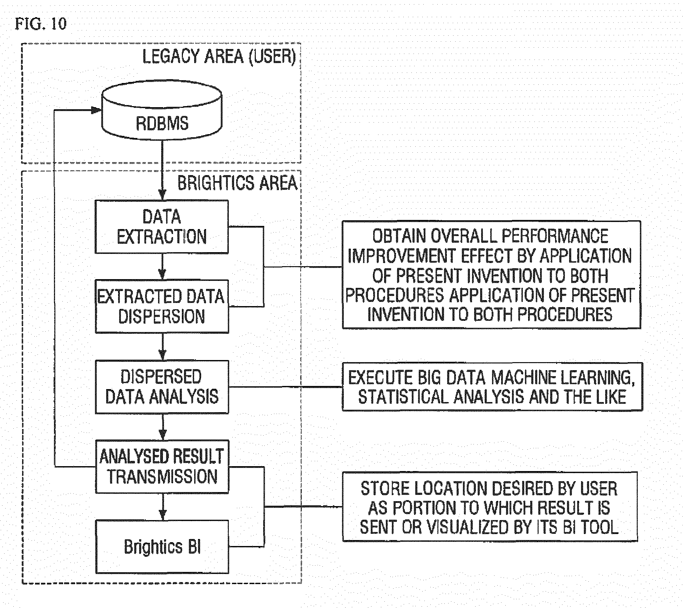

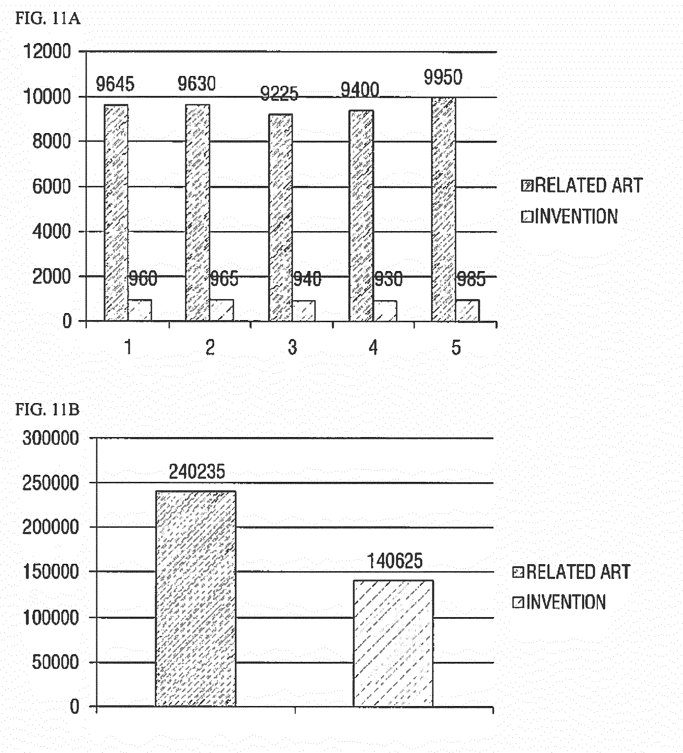

FIGS. 10 and 11a to 11b are exemplary views for explaining the effect of method for storing query result in distributed server according to the embodiment of the present invention.

With reference to FIG. 10, it is possible to check at which stage the method for storing query result in distributed server restricted by the present invention can be applied.

The present invention can be applied at the stage in which data is extracted from a relational database management system (RDBMS), that is, a legacy area in which a large volume of data is stored, and stored in a plurality of distributed servers.

The Brightics area is an analysis solution for a large volume of data. After storing the data to be distributed in the distributed server, it is possible to analyze a large volume of data by executing big data machine learning, statistical analysis, etc. in the Brightics area. The results of the analysis may be stored in the database again or may be visually provided to the user via the unique BI tool in the Brightics area.

The method for storing query result in distributed servers according to the present invention can be utilized in the process of loading a large volume of data stored in a database and distributing and storing it into a plurality of distributed servers which is a process displayed in dark color in FIG. 10. When using the improved JDBC driver of the present invention instead of the conventional JDBC driver, it is possible to greatly improve the performance.

Referring to FIG. 11a, it is possible to check the graph in which the time consumed in the process of storing a total of 5 million large-volume data to be distributed into ten distributed servers is compared between the case of using the conventional JDBC driver and the case of using the improved JDBC driver of the present invention.

Referring to FIG. 11a, during the total of 5 trials, when using the conventional JDBC driver, the time of 9645 ms, 9630 ms, 9225 ms, 9440 ms, and 9950 ms was consumed, and an average time of 9570 ms was taken. In contrast, when using the improved JDBC driver of the present invention, the time of 960 ms, 965 ms, 940 ms, 930 ms, and 985 ms was consumed, and an average time of about 956 ms was taken. It is possible to check that the total execution time has dramatically decreased by nearly 90%.

Next, referring to FIG. 11b, the is possible to check the graph, in the process of storing a total of 5 million large volume of data to be distributed into the ten distributed servers, the storage capacity required for the master server is compared between the case of using the conventional JDBC driver and the case of using the improved JDBC driver of the present invention.

Referring to FIG. 11b, when using the conventional JDBC driver, the master server needs a storage space of about 240,235 KB. That is, a storage space of about 240 MB is required for the master server. In comparison, when using the improved JDBC driver of the present invention, a storage capacity of about 140,625 KB, that is, a storage space of about 141 MB is sufficient. It is possible to check that the required storage capacity has decreased by 40%. This can lead to a decrease in network traffic.

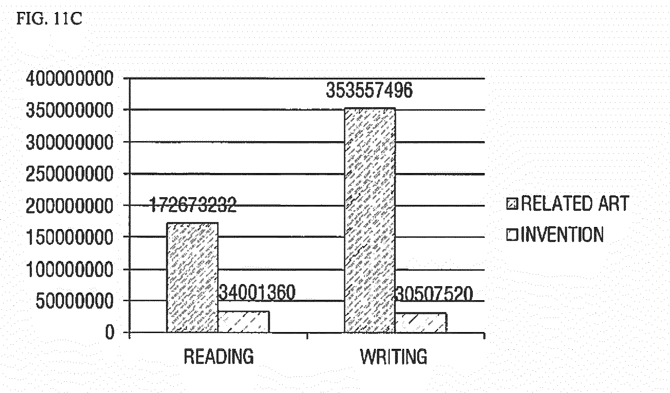

Next, referring to FIG. 11c, it is possible to check the graph in which, in the process of storing a total of 5 million large volume of data to be distributed in the ten distributed servers, the memory capacity required for the master server is compared between the case of using the conventional JDBC driver and the case of using the improved JDBC driver of the present invention.

Referring to FIG. 11c, when using the conventional JDBC driver, the master server requires the memory capacity of about 172,673,232 B in the reading process. That is, a memory capacity of about 173 MB is required for the master server in the reading process. In comparison, when using the improved JDBC driver of the present invention, the reading process is sufficient even with a memory capacity of about 34,001,360 B, that is, a memory capacity of about 34 MB. It is possible to check that the memory capacity required in the reading process has decreased by 90%.

Also, referring to FIG. 11c, when using the conventional JDBC driver, the master server requires the memory capacity of about 353,557,496 B in the writing process. That is, a memory capacity of about 354 MB is required for the master server in the writing process. In comparison, when using the improved JDBC driver of the present invention, the writing process is sufficient even with a memory capacity of about 30,507,520 B, that is, a memory capacity of about 31 MB. It is possible to check that the memory capacity required for the writing process has decreased by about 80%.

As described in FIGS. 11a to 11c, when using the improved JDBC driver of the present invention, there is an effect that the amount of resources required for the master server is reduced as compared with the conventional JDBC method, and the total execution time can also be shortened. Thus, the invention can also be applied to big data applications in service form considering simultaneous users.

The concepts of the invention described above can be embodied as computer-readable code on a computer-readable medium. The computer-readable medium may be, for example, a removable recording medium (a CD, a DVD, a Blu-ray disc, a USB storage device, or a removable hard disc) or a fixed recording medium (a ROM, a RAM, or a computer-embedded hard disc). The computer program recorded on the computer-readable recording medium may be transmitted to another computing apparatus via a network such as the Internet and installed in the computing apparatus. Hence, the computer program can be used in the computing apparatus.

While the present invention has been particularly illustrated and described with reference to exemplary embodiments thereof, it will be understood by those of ordinary skill in the art that various changes in form and detail may be made therein without departing from the spirit and scope of the present invention as defined by the following claims. The exemplary embodiments should be considered in a descriptive sense only and not for purposes of limitation.

## Claims

1. A method for storing a query result in a distributed server, the method comprising:
executing, by a master server (110), a query for querying data in a database (120);
receiving, by the master server (110), provision of meta data concerning the data and a first partial data constituting the data in a serialized state from the database (120) based on a result of the executing;
distributing, by the master server (110), the meta data and the first partial data provided in the serialized state to a first slave server (111-1);
deserializing, by the first slave server (111-1), the first partial data distributed in the serialized state from the master server (110) using the meta data; and
storing, by the first slave server (111-1), the deserialized first partial data on a local disk of the first slave server (111-1).

2. The method of claim 1, further comprising determining, by the master server (110), whether the data is a large volume of data requiring parallel processing,
wherein the executing, the receiving, and the distributing are performed in response to the determining indicating the parallel processing is required.

3. The method of claim 1, wherein the executing comprises querying, by the master server (110), the data in accordance with a fetch size.

4. The method of claim 3, wherein the querying comprises determining, by the master server (110), the fetch size to be a value smaller than or equal to a value obtained by dividing a total number of rows of the data by a total number of slave servers (111-1,...,111-N).

5. The method of claim 1, wherein the receiving comprises a step in which the master server (110) stores the first partial data provided in the serialized state from the database (120) in a temporary storage space, and
wherein the distributing comprises deleting, by the master server (110), the first partial data distributed to the first slave server (111-1) from the temporary storage space.

6. The method of claim 1, wherein the distributing comprises compressing, by the master server (110), the first partial data before the distributing.

7. The method of claim 1, wherein the deserializing comprises generating, by the first slave server (111-1), a virtual connection using the master server (110) as a virtual database.

8. The method of claim 7, wherein the deserializing comprises decompressing, by the first slave server (111-1), the first partial data before the deserializing.

9. The method of claim 1, wherein the deserializing comprises:
generating, by the first slave server (111-1), an object corresponding to the first partial data as a result of the deserializing; and
wherein the storing comprises storing, by the first slave server (111-1), the generated object on a local disk of the first slave server (111-1).

10. The method of claim 1, further comprising:
receiving, by the master server (110), provision of the meta data and a second partial data constituting the data in the serialized state from the database (120) as a result of the executing;
distributing, by the master server (110), the meta data and the second partial data provided in the serialized state to a second slave server (111-2);
deserializing, by the second slave server (111-2), the second partial data distributed in the serialized state from the master server (110) using the meta data; and
storing, by the second slave server (111-2), the deserialized second partial data on a local disk of the second slave server (111-2).

11. The method of claim 1, further comprising:
receiving, by the master server (110), provision of the meta data and an m-th partial data constituting the data in the serialized state from the database (120) as a result of the executing;
distributing, by the master server (110), the meta data and the m-th partial data provided in the serialized state to an m-th slave server (111-M);
deserializing, by the m-th slave server (111-M), the m-th partial data distributed in the serialized state from the master server (110) using the meta data, wherein m is a total number of stave servers (111-1,...111-N); and
storing, by the m-th slave server (111-M), the deserialized m-th partial data on a local disk of the m-th slave server (111-M).

12. The method of claim 1, further comprising:
receiving, by the master server (110), provision of the meta data and a k-th partial data constituting the data in the serialized state from the database (120) as a result of the executing;
distributing, by the master server (110), the meta data and the k-th partial data provided in the serialized state to a k'-th slave server (111-K');
deserializing, by the k'-th slave server (111-K'), the k-th partial data distributed in the serialized state from the master server (110) using the meta data; and
storing, by the k'-th slave server (111-K'), the deserialized k-th partial data on a local disk of the k'-th slave server (111-K'),
wherein k' is a remainder obtained by dividing k by m, and when the remainder is 0, k' is equal to m, and
m is a total number of slave servers (111-1 111-N).

13. The method of claim 1, wherein the executing, the distributing, and the providing are executed by the master server (110) using Java Database Connectivity, JDBC,
the deserializing is executed using the JDBC, and
the JDBC is obtained by modifying JDBC of existing type 1 to type 4.

14. A system for storing a query result in distributed server, the system comprising:
a master server (110) configured to execute a query for querying data in a database (120), receive meta data concerning the data and a first partial data constituting the data in a serialized state from the database (120), and distribute the meta data and the first partial data provided in the serialized state to the first slave server (111-1); and
a first slave server (111-1) configured to deserialize the first partial data distributed in the serialized state from the master server (110) using the meta data and to store the deserialized first partial data on a local disk.

15. A computer program stored in a recording medium, which when executed by a processor of a computing device, causes the computing device to execute a method comprising:
executing, by a master server (110), a query for querying data in a database (120);
receiving, by the master server (110), provision of meta data concerning the data and a first partial data constituting the data in a serialized state from the database (120) based on a result of the executing;
distributing, by the master server (110), the meta data and the first partial data provided in the serialized state to a first slave server (111-1);
deserializing, by the first slave server (111-1), the first partial data distributed in the serialized state from the master server (110) using the meta data; and
storing, by the first slave server (111-1), the deserialized first partial data on a local disk of the first slave server (111-1).

## Patentansprüche

1. Verfahren zur Speicherung eines Abfrageergebnisses in einem verteilten Server, wobei das Verfahren umfasst:
Ausführen, durch einen übergeordneten Server (110), einer Abfrage bezüglich Abfragedaten in einer Datenbank (120);
Empfangen, durch den übergeordneten Server (110), einer Bereitstellung von Metadaten hinsichtlich der Daten und erster Teildaten, die Bestandteil der Daten sind, in einem serialisierten Zustand aus der Datenbank (120) auf der Grundlage eines Ergebnisses des Ausführens;
Verteilen, durch den übergeordneten Server (110), der Metadaten und der ersten Teildaten, die in dem serialisierten Zustand bereitgestellt sind, auf einen ersten untergeordneten Server (111-1);
Entserialisieren, durch den ersten untergeordneten Server (111-1), der ersten Teildaten, die in dem serialisierten Zustand durch den übergeordneten Server (110) verteilt wurden, unter Anwendung der Metadaten; und
Speichern, durch den ersten untergeordneten Server (111-1), der entserialisierten ersten Teildaten auf einem lokalen Speicher des ersten untergeordneten Servers (111-1).

2. Verfahren nach Anspruch 1, das ferner erfasst: Ermitteln, durch den übergeordneten Server (110), ob die Daten großvolumige Daten sind, die eine Parallelverarbeitung erfordern,
wobei das Ausführen, das Empfangen und das Verteilen in Reaktion auf das Ermitteln ausgeführt werden, das angibt, dass die parallele Verarbeitung erforderlich ist.

3. Verfahren nach Anspruch 1, wobei das Ausführen umfasst: Abfragen, durch den übergeordneten Server (110), der Daten gemäß einer Abholgröße.

4. Verfahren nach Anspruch 3, wobei das Abfragen umfasst: Bestimmen, durch den übergeordneten Server (110), der Abholgröße derart, dass diese ein Wert ist, der kleiner als oder gleich einem Wert ist, der erhalten wird, indem eine Gesamtzahl an Reihen der Daten durch eine Gesamtzahl an untergeordneten Servern (111-1..., 111-N) geteilt wird.

5. Verfahren nach Anspruch 1, wobei das Empfangen einen Schritt umfasst, in welchem der übergeordnete Server (110) die in dem serialisierten Zustand aus der Datenbank (120) bereitgestellten ersten Teildaten in einem temporären Speicherplatz speichert, und
wobei das Verteilen umfasst: Löschen, durch den übergeordneten Server (110), der ersten Teildaten, die auf den ersten untergeordneten Server (111-1) verteilt wurden, aus dem temporären Speicherplatz.

6. Verfahren nach Anspruch 1, wobei das Verteilen umfasst: Komprimieren der ersten Teildaten durch den übergeordneten Server (110) vor dem Verteilen der ersten Teildaten.

7. Verfahren nach Anspruch 1, wobei das Entserialisieren umfasst: Erzeugen einer virtuellen Verbindung durch den ersten untergeordneten Server (111-1) unter Verwendung des übergeordneten Servers (110) als eine virtuelle Datenbank.

8. Verfahren nach Anspruch 7, wobei das Entserialisieren umfasst: Entkomprimieren der ersten Teildaten durch den ersten untergeordneten Server (111-1) vor dem Entserialisieren.

9. Verfahren nach Anspruch 1, wobei das Entserialisieren umfasst:
Erzeugen, durch den ersten untergeordneten Server (111-1), eines Objekts, das den ersten Teildaten entspricht, als Ergebnis des Entserialisierens; und
wobei das Speichern umfasst: Speichern des erzeugten Objekts auf einem lokalen Speicher des ersten untergeordneten Servers (111-1) durch den ersten untergeordneten Server (111-1).

10. Verfahren nach Anspruch 1, das ferner umfasst:
Empfangen, durch den übergeordneten Server (110), einer Bereitstellung der Metadaten und zweiter Teildaten, die Bestandteil der Daten sind, in dem serialisierten Zustand aus der Datenbank (120) als ein Ergebnis des Ausführens;
Verteilen, durch den übergeordneten Server (110), der Metadaten und der zweiten Teildaten, die in dem serialisierten Zustand bereitgestellt werden, auf einen zweiten untergeordneten Server (111-2);
Entserialisieren, durch den zweiten untergeordneten Server (111-2), der zweiten Teildaten, die in dem serialisierten Zustand von dem übergeordneten Server (110) verteilt sind, unter Anwendung der Metadaten; und
Speichern, durch den zweiten untergeordneten Server (111-2), der entserialisierten zweiten Teildaten auf einem lokalen Speicher des zweiten untergeordneten Servers (111-1).

11. Verfahren nach Anspruch 1, das ferner umfasst:
Empfangen, durch den übergeordneten Server (110), einer Bereitstellung der Metadaten und von m-ten-Teildaten, die Bestandteil der Daten sind, in dem serialisierten Zustand aus der Datenbank (120) als Ergebnis des Ausführens;
Verteilen, durch den übergeordneten Server (110), der Metadaten und der m-ten Teildaten, die in dem serialisierten Zustand bereitgestellt werden, auf einen m-ten untergeordneten Server (111-M);
Entserialisieren, durch den m-ten untergeordneten Server (111-M), der m-ten Teildaten, die in dem serialisierten Zustand von dem übergeordneten Server (110) verteilt sind, unter Anwendung der Metadaten, wobei m eine Gesamtanzahl an untergeordneten Servern (111-1,..., 111-N) ist; und
Speichern, durch den m-ten untergeordneten Server (111-M), der entserialisierten m-ten Teildaten auf einem lokalen Speicher des m-ten untergeordneten Servers (111-M).

12. Verfahren nach Anspruch 1, das ferner umfasst:
Empfangen, durch den übergeordneten Server (110), einer Bereitstellung der Metadaten und von k-ten Teildaten, die Bestandteil der Daten sind, in dem serialisierten Zustand aus der Datenbank (120) als ein Ergebnis des Ausführens;
Verteilen, durch den übergeordneten Server (110), der Metadaten und der k-ten Teildaten, die in dem serialisierten Zustand bereitgestellt sind, auf einen k'-ten untergeordneten Server (111-K');
Entserialisieren, durch den k'-ten untergeordneten Server (111-K'), der k-ten Teildaten, die in dem serialisierten Zustand von dem übergeordneten Server (110) verteilt sind, unter Anwendung der Metadaten; und
Speichern, durch den k'-ten untergeordneten Server (111-K'), der entserialisierten k-ten Teildaten auf einem lokalen Speicher des k'-ten Servers (111-K'),
wobei k' ein Rest ist, der durch Teilen von k durch m erhalten wird, und wenn der Rest gleich 0 ist, k' gleich m ist, und
m eine Gesamtanzahl an untergeordneten Servern (111-1,..., 111-N) ist.

13. Verfahren nach Anspruch 1, wobei das Ausführen, das Verteilen und das Bereitstellen durch den übergeordneten Server (110 unter Anwendung von Java Datenbank Connectivity, JDBC, ausgeführt werden,
das Entserialisieren unter Anwendung der JDBC ausgeführt wird, und
die JDBC durch Modifizieren von JDBC des bestehenden Typs 1 bis Typ 4 erhalten wird.

14. System zur Speicherung eines Abfrageergebnisses in einem verteilten Server, wobei das System aufweist:
einen übergeordneten Server (110), der ausgebildet ist, eine Abfrage nach Abfragedaten in einer Datenbank (120) auszuführen, Metadaten bezüglich der Daten zu empfangen und erste Teildaten, die Bestandteil der Daten sind, in einem serialisierten Zustand aus der Datenbank (120) zu empfangen und die Metadaten und die ersten Teildaten, die in dem serialisierten Zustand bereitgestellt werden, auf den ersten untergeordneten Server (111-1) zu verteilen; und
einen ersten untergeordneten Server (111-1), der ausgebildet ist, die ersten Teildaten, die in dem serialisierten Zustand von dem übergeordneten Server (110) verteilt sind, unter Anwendung der Metadaten zu entserialisieren und die entserialisierten ersten Teildaten auf einem lokalen Speicher zu speichern.

15. Computerprogramm, das in einem Aufzeichnungsmedium gespeichert ist und das, wenn es von einem Prozessor einer Recheneinrichtung ausgeführt wird, bewirkt, dass die Recheneinrichtung ein Verfahren ausführt, das aufweist:
Ausführen, durch einen übergeordneten Server (110), einer Abfrage bezüglich Abfragedaten in einer Datenbank (120);
Empfangen, durch den übergeordneten Server (110), einer Bereitstellung von Metadaten bezüglich der Daten und erster Teildaten, die Bestandteil der Daten sind, in einem serialisierten Zustand aus der Datenbank (120) auf der Grundlage eines Ergebnisses des Ausführens;
Verteilen, durch den übergeordneten Server (110), der Metadaten und der ersten Teildaten, die in dem serialisierten Zustand bereitgestellt werden, auf einen ersten untergeordneten Server (111-1);
Entserialisieren, durch den ersten untergeordneten Server (111-1), der ersten Teildaten, die in dem serialisierten Zustand von dem übergeordneten Server (110) verteilt sind, unter Anwendung der Metadaten; und
Speichern, durch den ersten untergeordneten Server (111-1), der entserialisierten ersten Teildaten auf einem lokalen Speicher des ersten untergeordneten Servers (111-1).

## Revendications

1. Procédé pour stocker un résultat d'interrogation dans un serveur distribué, le procédé comprenant les étapes consistant à :
exécuter, par un serveur maître (110), une interrogation pour demander des données dans une base de données (120) ;
recevoir, par le serveur maître (110), la fourniture de métadonnées concernant les données et de premières données partielles constituant les données dans un état sérialisé à partir de la base de données (120) sur la base d'un résultat de l'exécution ;
distribuer, par le serveur maître (110), les métadonnées et les premières données partielles fournies dans l'état sérialisé à un premier serveur esclave (111-1) ;
désérialiser, par le premier serveur esclave (111-1), les premières données partielles distribuées dans l'état sérialisé à partir du serveur maître (110) en utilisant les métadonnées ; et
stocker, par le premier serveur esclave (111-1), les premières données partielles désérialisées sur un disque local du premier serveur esclave (111-1).

2. Procédé selon la revendication 1, comprenant en outre de déterminer, par le serveur maître (110), si les données constituent un grand volume de données nécessitant un traitement parallèle,
dans lequel l'exécution, la réception, et la distribution sont effectuées en réponse à la détermination indiquant que le traitement parallèle est requis.

3. Procédé selon la revendication 1, dans lequel l'exécution comprend de demander, par le serveur maître (110), les données en fonction d'une taille d'extraction.

4. Procédé selon la revendication 3, dans lequel l'interrogation comprend de déterminer, par le serveur maître (110), la taille d'extraction comme étant une valeur inférieure ou égale à une valeur obtenue en divisant un nombre total de rangées des données par un nombre total de serveurs esclaves (111-1, ..., 111-N).

5. Procédé selon la revendication 1, dans lequel la réception comprend une étape dans laquelle le serveur maître (110) stocke les premières données partielles fournies dans l'état sérialisé en provenance de la base de données (120) dans un espace de stockage temporaire, et
dans lequel la distribution comprend la suppression, par le serveur maître (110), des premières données partielles distribuées au premier serveur esclave (111-1) depuis l'espace de stockage temporaire.

6. Procédé selon la revendication 1, dans lequel la distribution comprend la compression, par le serveur maître (110), des premières données partielles avant la distribution.

7. Procédé selon la revendication 1, dans lequel la désérialisation comprend la génération, par le premier serveur esclave (111-1), d'une connexion virtuelle utilisant le serveur maître (110) en tant que base de données virtuelle.

8. Procédé selon la revendication 7, dans lequel la désérialisation comprend de décomprimer, par le premier serveur esclave (111-1), les premières données partielles avant la désérialisation.

9. Procédé selon la revendication 1, dans lequel la désérialisation comprend :
la génération, par le premier serveur esclave (111-1), d'un objet correspondant aux premières données partielles en résultat de la désérialisation ; et
dans lequel la mémorisation comprend la mémorisation, par le premier serveur esclave (111-1), de l'objet généré sur un disque local du premier serveur esclave (111-1).

10. Procédé selon la revendication 1, comprenant en outre les étapes consistant à :
recevoir, par le serveur maître (110), la fourniture des métadonnées et de secondes données partielles constituant les données dans l'état sérialisé en provenance de la base de données (120) en résultat de l'exécution ;
distribuer, par le serveur maître (110), les métadonnées et les secondes données partielles fournies dans l'état sérialisé à un second serveur esclave (111-2) ;
désérialiser, par le second serveur esclave (111-2), les secondes données partielles distribuées dans l'état sérialisé à partir du serveur maître (110) en utilisant les métadonnées ; et
stocker, par le second serveur esclave (111-2), les secondes données partielles désérialisées sur un disque local du second serveur esclave (111-2).

11. Procédé selon la revendication 1, comprenant en outre les étapes consistant à :
recevoir, par le serveur maître (110), la fourniture des métadonnées et de m-ième données partielles constituant les données dans l'état sérialisé en provenance de la base de données (120) en résultat de l'exécution ;
distribuer, par le serveur maître (110), les métadonnées et les m-ièmes données partielles fournies dans l'état sérialisé à un m-ième serveur esclave (111-M) ;
désérialiser, par le m-ième serveur esclave (111-M), les m-ième données partielles distribuées dans l'état sérialisé à partir du serveur maître (110) en utilisant les métadonnées, m étant un nombre total de serveurs esclaves (111-1, ... 111-N) ; et
mémoriser, par le m-ième serveur esclave (111-M), les m-ièmes données partielles désérialisées sur un disque local du m-ième serveur esclave (111-M).

12. Procédé selon la revendication 1, comprenant en outre les étapes consistant à :
recevoir, par le serveur maître (110), la fourniture des métadonnées et de k-ièmes données partielles constituant les données dans l'état sérialisé en provenance de la base de données (120) en résultat de l'exécution ;
distribuer, par le serveur maître (110), les métadonnées et les k-ièmes données partielles fournies dans l'état sérialisé à un k'-ième serveur esclave (111-K') ;
désérialiser, par le k'-ième serveur esclave (111-K'), les k-ièmes données partielles distribuées dans l'état sérialisé à partir du serveur maître (110) en utilisant les métadonnées ; et
mémoriser, par le k'-ième serveur esclave (111-K'), les k-ièmes données partielles désérialisées sur un disque local du k'-ième serveur esclave (111-K'),
dans lequel k' est un reste obtenu en divisant k par m, et lorsque le reste est égal à 0, k' est égal à m, et
m est un nombre total de serveurs esclaves (111-1, ..., 111-N).

13. Procédé selon la revendication 1, dans lequel l'exécution, la distribution, et la fourniture sont exécutées par le serveur maître (110) en utilisant une Connectivité à la Base de données Java, JDBC,
la désérialisation est exécutée à l'aide de la JDBC, et
la JDBC est obtenue en modifiant la JDBC de type 1 existant en type 4.

14. Système pour stocker un résultat d'interrogation dans un serveur distribué, le système comprenant :
un serveur maître (110) configuré pour exécuter une interrogation pour demander des données dans une base de données (120), recevoir des métadonnées concernant les données et des premières données partielles constituant les données dans un état sérialisé en provenance de la base de données (120), et pour distribuer les métadonnées et les premières données partielles fournies dans l'état sérialisé au premier serveur esclave (111-1); et
un premier serveur esclave (111-1) configuré pour désérialiser les premières données partielles distribuées dans l'état sérialisé à partir du serveur maître (110) en utilisant les métadonnées et pour stocker les premières données partielles désérialisées sur un disque local.

15. Programme informatique stocké sur un support d'enregistrement qui, lorsqu'il est exécuté par un processeur d'un dispositif informatique, amène le dispositif informatique à exécuter un procédé comprenant les étapes consistant à :
exécuter, par un serveur maître (110), une interrogation pour demander des données dans une base de données (120) ;
recevoir, par le serveur maître (110), la fourniture de métadonnées concernant les données et de premières données partielles constituant les données dans un état sérialisé à partir de la base de données (120) sur la base d'un résultat de l'exécution ;
distribuer, par le serveur maître (110), les métadonnées et les premières données partielles fournies dans l'état sérialisé à un premier serveur esclave (111-1) ;
désérialiser, par le premier serveur esclave (111-1), les premières données partielles distribuées dans l'état sérialisé à partir du serveur maître (110) en utilisant les métadonnées ; et
stocker, par le premier serveur esclave (111-1), les premières données partielles désérialisées sur un disque local du premier serveur esclave (111-1).
